# EUROPÄISCHE PATENTSCHRIFT

(11) **EP 1 386 507 B1**
(45) Veröffentlichungstag und Bekanntmachung des Hinweises auf die Patenterteilung: **24.06.2009**
(21) Anmeldenummer: 02742704.6
(22) Anmeldetag: 30.04.2002
(51) Int. Cl.: H04W 16/10

(54) **VERFAHREN ZUR ZUWEISUNG VON FREQUENZEN ZU BASISSTATIONEN EINES MOBILFUNKNETZES**
METHOD FOR ASSIGNING FREQUENCIES TO BASE STATIONS OF A MOBILE TELEPHONE NETWORK
PROCEDE D'ATTRIBUTION DE FREQUENCES A DES STATIONS DE BASE D'UN RESEAU DE TELEPHONIE MOBILE

(30) Priorität: 05.05.2001 DE 10121978
(43) Veröffentlichungstag der Anmeldung: 04.02.2004
(73) Patentinhaber: T-Mobile Deutschland GmbH, 53227 Bonn (DE)
(72) Erfinder: CRISAN, Christine, 53229 Bonn (DE)
(74) Vertreter: Riebling, Günter
(86) Internationale Anmeldenummer: PCT/DE2002/001568
(87) Internationale Veröffentlichungsnummer: WO 2002/091774

(56) Entgegenhaltungen:
- EP-A- 0 802 695
- US-A- 5 507 007
- US-A- 5 722 043
- US-A- 6 085 093

## Beschreibung

Die Erfindung betrifft ein Verfahren zur Zuweisung von Frequenzen zu Basisstationen eines Mobilfunknetzes, und insbesondere ein Verfahren zur automatischen Zurücksetzung bereits zugewiesener Frequenzen im Fall ungesättigter Basisstationen und Neuzuweisung von Frequenzen zu den Basisstationen.

Im Zuge der Erweiterung eines bestehenden Mobilfunknetzes, z.B. durch Hinzufügen neuer Basisstationen, kann es nach der Frequenzzuweisung, die in der Regel mit Hilfe von EDV-gestützten Verfahren durchgeführt wird, dazu kommen, daß einige der neu hinzugefügten Basisstationen ungesättigt sind. Das bedeutet, daß den Basisstationen weniger Frequenzen als gefordert zugewiesen werden (können).

Grundsätzlich gibt es zwei Gründe weshalb diese Basisstationen, nach Anwendung eines Verfahrens zur Frequenzzuweisung, ungesättigt sind. Zum einen kann es sich um Basisstationen handeln, für die aufgrund der Netzstruktur im Zusammenhang mit den Planungsparametern keine Sättigung erreicht werden kann, zum anderen können es Basisstationen sein, denen aufgrund früherer Zuweisungen von Frequenzen an "alten" Basisstationen nicht die gewünschte Anzahl interferenzfreier Frequenzen zugewiesen werden können. Für den zweiten Fall besteht prinzipiell die Möglichkeit, eine Sättigung der Basisstationen zu erreichen indem "alte" Frequenzzuweisungen umgestimmt werden, so daß danach eine Zuweisung von Frequenzen an den neu hinzugefügten Stationen ermöglicht wird. Diese zweite Möglichkeit wurde bisher von den Funknetzplanern manuell durchgeführt. Die manuelle Nachbearbeitung erforderte nicht nur das Erkennen der Stationen, die eine Zuweisung verhindern, sondern auch das Herausfinden einer optimalen neuen Zuweisung von Frequenzen.

US 5 507 007 A offenbart ein Verfahren zur Bestimmung der Verteilung von Grenzwertkapazitäten von gegebenen Funkzellen eines zellularen Mobilfunksystems. Das Mobilfunksystem umfasst Basisstationen mit zugeordneten Abdeckungsbereichen, wobei weitere Radiostationen im Abdeckungsbereich der Funkzellen angeordnet sind. Es werden Kompatibilitätsberechnungen für jedes Element oder für eine Auswahl von Elementen einer Ausschließungsmatrix in Bezug auf alle oder eine Auswahl der Kanäle bei einer gegebenen Kanalzuordnung durchgeführt. Die Kanäle werden auf diese Weise iterativ umverteilt in Abhängigkeit eines zeitabhängigen Verkehrserfordernisses in jeder Zelle.

Die Aufgabe der vorliegenden Erfindung besteht darin, ein Verfahren anzugeben, das ungesättigten Basisstationen automatisch die entsprechend benötigten Frequenzen zuweist, soweit dies möglich ist.

Diese Aufgabe wird durch die in Anspruch 1 angegebenen Merkmale gelöst.

Vorteilhafte Ausgestaltungen und Weiterbildungen des Verfahrens sind in den abhängigen Ansprüchen angegeben.

Das Verfahren wird vorzugsweise in Form von Software implementiert.

Der Vorteil des beschriebenen Verfahrens liegt darin, dass es selbständig Basisstationen erkennt, deren Frequenzen neue Zuweisungen verhindern und
- diese bestehenden Zuweisungen rückgängig macht,
- automatisch die rückgängig gemachten Frequenzzuweisungen durch neue Frequenzen ersetzt und
- den ursprünglich ungesättigten Basisstationen Frequenzen zuweist.

Somit wird die Arbeit des Funknetzplaners wesentlich erleichtert, da das Verfahren vollkommen automatisch abläuft und eine manuelle Frequenzzuweisung nicht mehr nötig ist.

Ein Ausführungsbeispiel der Erfindung wird nachfolgend anhand der Zeichnungen näher beschrieben. Dabei ergeben sich weitere Merkmale, Vorteile und Anwendungsmöglichkeiten des Verfahrens.

Es zeigt:
- Figur 1:: Den funktionalen Ablauf der Frequenzzuweisung mit automatischer Zurücksetzung und Neuzuweisung;
- Figur 2:: Eine Darstellung verschiedener Rücksetzungstiefen (Ringtiefen) anhand eines zellularen Mobilfunknetzes.

Bei der Frequenzzuweisung geht es darum, Basisstationen (BS) Frequenzen zuzuweisen. Die Zuweisung muss bestimmte Randbedingungen, die im wesentlichen der Minderung der Interferenz im Mobilfunknetz dienen, erfüllen. Eine BS benötigt in der Regel mehr als eine Frequenz.

Die an einer Basisstation benötigten Frequenzen erhalten im Vorfeld eine Priorität. Die Frequenzen werden den Basisstationen in der Reihenfolge ihrer Priorität zugewiesen. Frequenzen der höchsten Priorität werden wichtigen Steuerkanälen (z.B. BCCH: Broadcast Control Channel) zugewiesen. Es folgen die Frequenzen zweiter Priorität für die Verkehrskanäle (TCH: Traffic Channel) und Frequenzen dritter Priorität für andere Kanäle (z.B. HTCH).

Beispiel: Eine Basisstation benötigt vier Frequenzen. Dann kann eine Priorisierung wie folgt aussehen: die Basisstation benötigt eine Frequenz der Priorität 1, eine Frequenz der Priorität 2 und zwei Frequenzen der Priorität 3.

In diesem Fall wird der Basisstation erst eine Frequenz der Priorität 1 zugewiesen. Falls eine Zuweisung erfolgreich ist, d.h. der BS konnte die Frequenz zugewiesen werden, wird der BS eine Frequenz der Priorität 2 zugewiesen. Anschließend, falls die Zuweisung der Frequenz mit der Priorität 2 erfolgreich war, werden der BS zwei Frequenzen der Priorität 3 zugewiesen.

Nachfolgend werden die Frequenzen mit den unterschiedlichen Priorisierungen allgemein mit P1 (Priorität 1), P2, P3 usw. bezeichnet. Es gilt grundsätzlich, daß Frequenzen der Priorität 1 vor Frequenzen der Priorität 2 usw. zugewiesen werden müssen.

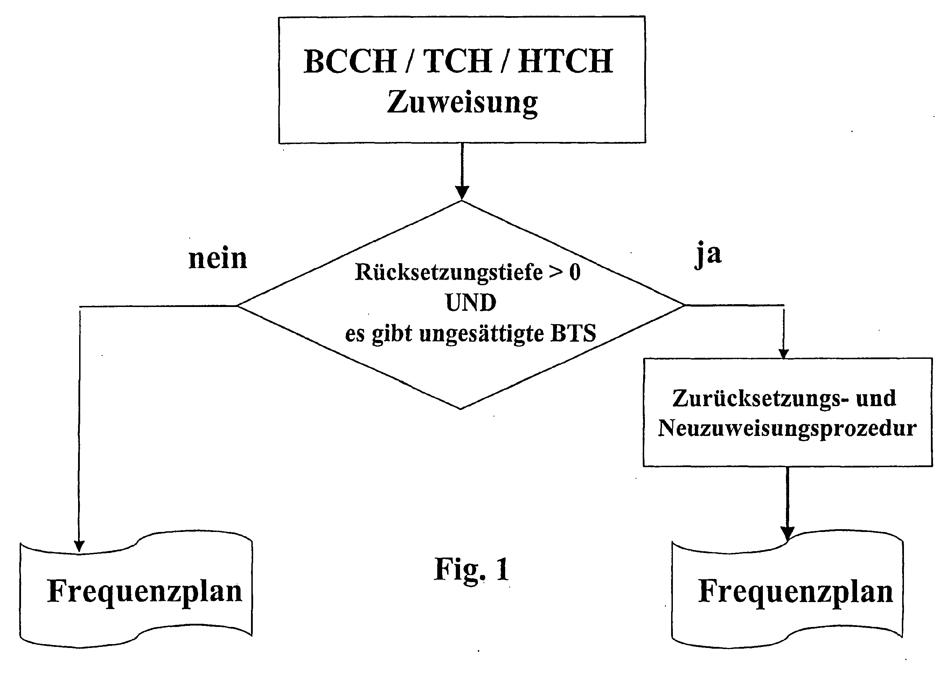

Der funktionale Ablauf ist in der Figur 1 dargestellt: Zunächst wird von einer Frequenzzuweisung mit einem beliebigen, aus dem Stand der Technik bekannten Verfahren ausgegangen. Gibt es keine ungesättigten Basisstationen, erhält man einen vollständigen Frequenzplan.

Gibt es jedoch ungesättigte Basisstationen, so wird das erfindungsgemäße Verfahren ausgeführt, d.h. es erfolgt eine Zurücksetzungsprozedur der bisherigen Frequenzzuweisung und eine anschließende automatische Neuzuweisung von Frequenzen. In welchem Umfang das Zurücksetzungsverfahren ausgeführt wird, wird u.a. durch einen Parameter, dem Rücksetzungstiefe-Parameter, gesteuert.

Das Grundprinzip des Verfahrens zum Zurücksetzen von Frequenzen besteht im wesentlichen aus vier Schritten:

Schritt 1: Es wird als erstes geprüft, ob Combinerabstände eine Sättigung der Station verhindern. Wenn dies der Fall ist, werden die entsprechenden Frequenzen zurückgesetzt und neu zugewiesen, so dass der Sättigungsgrad der Station erhöht wird. Unter Combinerabstand wird der Frequenzabstand von an einer Basisstation verwendeten Frequenzen bezeichnet. Durch Festsetzen eines bestimmten Combinerabstands können zu starke Interferenzen zwischen den Frequenzen vermieden werden.

Beispiel: Eine Station hat die Frequenz 16 als P1 Frequenz zugewiesen und sie benötigt noch eine P2 Frequenz. Die verfügbare Frequenzmenge sei { 14, 15, 16, 17, 18 }, der Combinerabstand sei gleich 3. Alle Frequenzen seien prinzipiell sowohl als P1 als auch als P2 Frequenz zulässig. Die Frequenzen 14, 15, 17 und 18 können jedoch aufgrund des Combinerabstandes als P2 Frequenz nicht zugewiesen werden. Der Station kann also keine P2 Frequenz zugewiesen werden. Durch Umstimmung der P1 Frequenz von 16 auf 14 wird jedoch ermöglicht, daß die Frequenz 17 als P2 Frequenz zugewiesen werden kann. Die Station hat dann die Frequenzen 14 und 17 als P1 bzw. P2 Frequenzen zugewiesen.

Schritt 2: Ist der erste Schritt nicht erfolgreich, d.h. kann der Basisstation in diesem Schritt keine P2 Frequenz zugewiesen werden, so wird in einem zweiten Schritt geprüft, ob - je nach Zuweisungsart - eine Pn+1, Pn+2, Pn+3 usw. Frequenz die Qualitätsanforderungen für eine Pn Frequenz, d.h. einer Frequenz höherer Priorität, besitzt. Wenn dies der Fall ist, wird die entsprechende Frequenz umgestimmt. z.B. wird eine P2 Frequenz zur P1 Frequenz erhoben. Falls möglich wird die umgestimmte Frequenz neu zugewiesen. Generell gilt, daß eine Pn Frequenz zugunsten einer Pn-1, Pn-2, ... , P1 Frequenz umgestimmt werden darf.

Beispiel: Gegeben sei eine Station, der die Frequenz 16 als P2 Frequenz zugewiesen wurde. Die Station benötigt noch eine P1 Frequenz. Die Menge der erlaubten Frequenzen sei { 14, 15, 16, 17, 18 }, der Combinerabstand sei gleich 3. Die Frequenzen 14, 15, 17 und 18 seien aufgrund von Zuweisungen an anderen Stationen für die betrachtete Basisstation nicht zulässig. Wenn die Frequenz 16 auch P1 Qualität besitzt, dann wird sie zur P1 Frequenz umgestimmt. Die BS besitzt dann allerdings keine P2 Frequenz mehr. Gäbe es eine weitere Frequenz, die an der Station als P2 Frequenz zulässig wäre, so würde das Verfahren diese zusätzlich zuweisen. Die BS besäße dann auch eine P2 Frequenz.

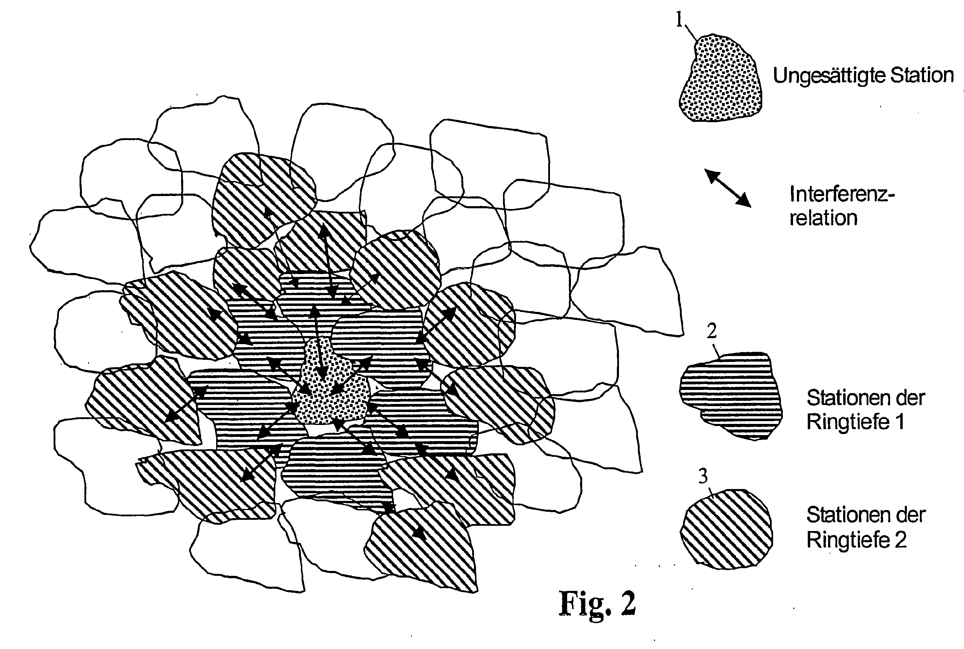

Schritt 3: Ist der vorherige Schritt nicht erfolgreich, so werden Frequenzen an Stationen zurückgesetzt, die eine direkte Interferenzbeziehung zur aktuellen Station haben und die eine Zuweisung an der aktuellen Station verhindern. Figur 2 zeigt schematisch einen Ausschnitt aus einem zellularen Mobilfunknetz, bestehend aus einer Vielzahl von Funkzellen 1, 2, 3, die jeweils von mindestens einer Basisstation (nicht im einzelnen dargestellt) mit Funksignalen versorgt werden. Die Basisstationen stehen in einer Interferenzrelation zueinander, wobei zu einer Basisstation 1 unmittelbar benachbarte Basisstationen 2 in der Regel in einer direkten Interferenzbeziehung zu der betrachteten Basisstation stehen, während weiter entfernte Basisstationen 3 in der Regel nur eine indirekte Interferenzbeziehung zur Basisstation 1 haben. Kann einer betrachteten Station 1 eine geforderte Frequenz nur aufgrund von paarweisen Interferenzbeziehungen nicht zugewiesen werden, dann werden die Frequenzen der Stationen 2, die die entsprechende Zuweisung verhindert haben, zurückgesetzt. Dies wird vom Algorithmus durchgeführt, falls an den Stationen an denen die Rücksetzungen erfolgte, bereits Ersatzfrequenzen zugewiesen werden konnten. Man spricht davon, dass eine Rücksetzung in der Rücksetzungstiefe 1 (Ringtiefe 1) erfolgte.

Beispiel: Gegeben sei eine Station A, die eine P1 Frequenz benötigt. Die Frequenzmenge sei { 14, 15, 16, 17, 18 } und der Combinerabstand gleich 3. Die Frequenzen 14 und 18 seien aufgrund von Koordinierungspflicht dieser Station nicht zuweisbar. Unter Koordinierungspflicht werden Einschränkungen in der Frequenzwahl und -benutzung an Staatsgrenzen verstanden. Einer Störerstation B wurde die Frequenz 16 als P1 Frequenz zugewiesen. Aufgrund dessen dürfen der Station A die Frequenzen 15, 16 und 17 nicht zugewiesen werden. Das Zurücksetzungsverfahren setzt in einem solchen Fall die P1 Frequenz des Störers zurück, weist z.B. die Frequenz 16 der Station A zu und anschließend der Station B die Frequenz 14. Kann jedoch dem Störer keine Ersatzfrequenz zugewiesen werden, bleibt die Station A weiterhin ungesättigt und die zurückgesetzte Frequenz an der Station B wird wieder zugewiesen. Dieses Beispiel ist in der Tabelle 1 graphisch dargestellt. In den einzelnen Spalten ist das vorhandene Frequenzspektrum dargestellt. Die Reihen zeigen die Frequenzsituation an den Stationen A und B vor und nach der Durchführung des automatischen Zurücksetzens und Neuzuweisens.

| Frequenzen: | 14 | 15 | 16 | 17 | 18 |
|---|---|---|---|---|---|
| | | | | | |
| Station A: | L | N | N | N | L |
| Station B: | C | C | X | C | C |
| | | | | | |
| Station A: | N | N | X | C | L |
| Station B: | X | N | N | N | * |

| | | | | | |
|---|---|---|---|---|---|
| Legende: X: zugewiesene BCCH Frequenz C: Verbotene Frequenz aufgrund des Combinerabstandes L: Verbotene Frequenz aufgrund von Koordinierungspflicht N: Verbotene Frequenz aufgrund Störung von einer anderen Station * : Als BCCH zulässige Frequenz | | | | | |

Schritt 4: Ist der vorherige Schritt ebenfalls nicht erfolgreich und ist der Rücksetzungstiefe-Parameter größer 1, so werden die Frequenzen an benachbarten Stationen 3 zurückgesetzt, die eine Zuweisung durch eine indirekte Interferenzbeziehung zur betrachteten Basisstation 1 verhindert haben.

Bezogen auf das vorherige Beispiel kann die Aussage getroffen werden: Kann dem Störer Station B aufgrund anderer Stationen keine Frequenz zugewiesen werden, dann werden die Frequenzen der Störer von B zurückgesetzt. Es erfolgt danach eine Zuweisung von Frequenzen an alle Stationen, an denen Frequenzen zurückgesetzt wurden.

In Figur 2 sind die Basisstationen 3 mit Rücksetzungstiefe 2 dargestellt.

Die Frequenzzuweisung erfolgt grundsätzlich für die Frequenzanforderungen einer ausgewählten Priorität. Das Zurücksetzungsverfahren betrachtet BS mit ungesättigte Frequenzanforderungen der gleichen Priorität wie bei der Frequenzzuweisung. Umgestimmt können allerdings auch Frequenzen anderer Priorität als die des Frequenzzuweisungsschrittes. Werden mehrere gültige Lösungen für einen der beschriebenen Schritte ermittelt, so wird die Lösung mit der geringsten Anzahl von zurückgesetzten Frequenzen ausgewählt. Gibt es mehrere Lösungen mit einer gleichen Anzahl von zurückzusetzenden Frequenzen, so entscheidet die Güte der zurückzusetzenden Frequenzen. Es werden Pn vor Pn-1 Frequenzen bevorzugt zurückgesetzt.

## Patentansprüche

1. Verfahren zur automatischen Rücksetzung und Neuzuweisung von Frequenzen zu ungesättigten Basisstationen eines Mobilfunknetzes, wobei in einem ersten Schritt geprüft wird, ob Combinerabstände eine Sättigung einer Basisstation verhindern und falls zutreffend die entsprechenden Frequenzen zurückgesetzt und neu zugewiesen werden, dass im Falle, dass der Basisstation im vorhergehenden Schritt keine Frequenz zugewiesen werden konnte in einem zweiten Schritt geprüft wird, ob - je nach Zuweisungsart - eine Frequenz mit Priorität Pn+1 die Qualitätsanforderungen für eine Frequenz mit Priorität Pn besitzt, wobei wenn dies der Fall ist die entsprechende Frequenz umgestimmt wird und eine Neuzuweisung der Frequenzen erfolgt;
dass im Falle, dass der Basisstation in den vorhergehenden Schritten keine Frequenz zugewiesen werden konnte in einem dritten Schritt Frequenzen an mindestens einer benachbarten Basisstation zurückgesetzt werden, die eine direkte Interferenzbeziehung zur betrachteten Basisstation haben und die eine Frequenzzuweisung an der betrachteten Station verhindern, wobei eine Neuzuweisung von Frequenzen für die betrachtete und die benachbarte Basisstation erfolgt;
dass im Falle, dass der Basisstation in den vorhergehenden Schritten keine Frequenz zugewiesen werden konnte in einem vierten Schritt die Frequenzen an mindestens einer Basisstation zurückgesetzt werden, die eine Zuweisung durch eine indirekte Interferenzbeziehung zur betrachteten Basisstation verhindern, wobei eine Neuzuweisung von Frequenzen für die betrachtete und die benachbarte Basisstation erfolgt.

2. Verfahren nach Anspruch 1, **dadurch gekennzeichnet, dass** im Falle, dass der benachbarten Basisstation gemäß dem dritten oder vierten Schritt keine Ersatzfrequenz zugewiesen werden kann, die betrachtete Basisstation weiterhin ungesättigt bleibt und der benachbarten Basisstation die zurückgesetzte Frequenz wieder zugewiesen wird.

3. Verfahren nach einem der vorhergehenden Ansprüche, **dadurch gekennzeichnet, dass** im Falle, dass der benachbarten Basisstation aufgrund anderer Basisstationen keine Frequenz zugewiesen werden kann, die betreffenden Frequenzen der weiteren die benachbarte Basisstationen störenden Basisstationen zurückgesetzt werden, wobei nachfolgend eine Neuzuweisung von Frequenzen an allen Stationen, an denen Frequenzen zurückgesetzt wurden, erfolgt.

4. Verfahren nach einem der vorhergehenden Ansprüche, **dadurch gekennzeichnet, dass** die Frequenzzuweisung grundsätzlich für die Frequenzanforderungen einer ausgewählten Priorität erfolgt.

5. Verfahren nach einem der vorhergehenden Ansprüche, **dadurch gekennzeichnet, dass** das Zurücksetzungsverfahren Basisstationen mit ungesättigten Frequenzanforderungen der gleichen Priorität wie bei der Frequenzzuweisung betrachtet.

6. Verfahren nach einem der vorhergehenden Ansprüche, **dadurch gekennzeichnet, dass** auch Frequenzen anderer Priorität als die des aktuellen Frequenzzuweisungsschrittes umgestimmt werden können.

7. Verfahren nach einem der vorhergehenden Ansprüche, **dadurch gekennzeichnet, dass** im Falle, dass mehrere gültige Lösungen für einen der beschriebenen Schritte ermittelt werden, die Lösung mit der geringsten Anzahl von zurückzusetzenden Frequenzen ausgewählt wird.

8. Verfahren nach einem der vorhergehenden Ansprüche, **dadurch gekennzeichnet, dass** im Falle, dass es mehrere Lösungen mit einer gleichen Anzahl von zurückzusetzenden Frequenzen gibt, die Güte der zurückzusetzenden Frequenzen über die Auswahl der Lösung entscheidet, wobei Frequenzen mit der Priorität Pn vor den Prioritäten Pn-1 bevorzugt zurückgesetzt werden.

## Claims

1. Method for the automatic resetting and reallocation of frequencies to unsaturated base stations in a mobile communications network, wherein in a first step it is checked whether combiner spacings prevent saturation of a base station and if this is true the corresponding frequencies are reset and reallocated, where in the case that no frequency could be allocated to the base station in the previous step it is checked in a second step whether, depending on the type of allocation, a frequency having priority Pn+1 has the quality requirements for a frequency having priority Pn, wherein if this is the case the corresponding frequency is retuned and reallocation of the frequencies ensues; that in the case that no frequency could be allocated to the base station in the previous steps in a third step frequencies on at least one neighbouring base station are reset which have a direct interference relationship with the base station under consideration and which prevent a frequency allocation to the station under consideration, wherein a reallocation of frequencies for the base station under consideration and the neighbouring base station ensues; where in the event that no frequency could be allocated to the base station in the previous steps in a fourth step the frequencies on at least one base station are reset which prevent allocation due to an indirect interference relationship with the base station under consideration, wherein reallocation of frequencies for the base station under consideration and the neighbouring base station ensues.

2. Method according to claim 1, **characterised in that** in the event that according to the third or fourth step no substitute frequency can be allocated to the neighbouring base station the base station under consideration continues to remain unsaturated and the reset frequency is again allocated to the neighbouring base station.

3. Method according to any of the preceding claims, **characterised in that** in the event that no frequency can be allocated to the neighbouring base station due to other base stations the frequencies in question of the other base stations interfering with the neighbouring base stations are reset, wherein subsequently a reallocation of frequencies to all stations on which frequencies were reset ensues.

4. Method according to any of the preceding claims, **characterised in that** frequency allocation fundamentally ensues for frequency requirements of a selected priority.

5. Method according to any of the preceding claims, **characterised in that** the resetting process takes into consideration base stations having unsaturated frequency requirements of the same priority as in the frequency allocation.

6. Method according to any of the preceding claims, **characterised in that** frequencies of different priority from that of the current frequency allocation step can also be retuned.

7. Method according to any of the preceding claims, **characterised in that** the event that a plurality of valid solutions are determined for one of the described steps the solution having the lowest number of reset frequencies is selected.

8. Method according to any of the preceding claims, **characterised in that** in the event that there is a plurality of solutions having the same number of reset frequencies the quality of the reset frequencies determines the choice of solution, wherein frequencies having the priority Pn are reset by preference ahead of the priorities Pn-1.

## Revendications

1. Procédé pour la réinitialisation et la réattribution automatiques de fréquences à des stations de base non saturées d'un réseau de téléphonie mobile, selon lequel on vérifie lors d'une première étape si des espacements de combineur empêchent une saturation d'une station de base, et si c'est le cas, les fréquences correspondantes sont réinitialisées et réattribuées,
dans le cas où lors de l'étape précédente aucune fréquence n'a pu être attribuée à la station de base, on vérifie lors d'une deuxième étape si - suivant le type d'attribution - une fréquence avec une priorité Pn+1 présente les exigences de qualité pour une fréquence avec une priorité Pn, et si c'est le cas, la fréquence correspondante est changée et une réattribution des fréquences a lieu ;
dans le cas où lors des étapes précédentes aucune fréquence n'a pu être attribuée à la station de base, on réinitialise lors d'une troisième étape les fréquences au niveau d'au moins une station de base voisine qui a une relation d'interférence directe avec la station de base considérée et qui empêche une attribution de fréquence à celle-ci, une réattribution de fréquences ayant lieu pour la station de base considérée et pour la station de base voisine ;
dans le cas où lors des étapes précédentes aucune fréquence n'a pu être attribuée à la station de base, on réinitialise lors d'une quatrième étape les fréquences au niveau d'au moins une station de base qui empêche une attribution à cause d'une relation d'interférence indirecte avec la station de base considérée, une réattribution de fréquences ayant lieu pour la station de base considérée et pour la station de base voisine.

2. Procédé selon la revendication 1, **caractérisé en ce que** dans le cas où aucune fréquence de remplacement ne peut être attribuée à la station de base voisine selon la troisième ou quatrième étape, la station de base considérée reste non saturée et la fréquence réinitialisée est à nouveau attribuée à la station de base voisine.

3. Procédé selon l'une des revendications précédentes, **caractérisé en ce que** dans le cas où aucune fréquence ne peut être attribuée à la station de base voisine à cause d'autres stations de base, les fréquences concernées des autres stations de base qui gênent les stations de base voisines sont réinitialisées, une réattribution de fréquences à toutes les stations au niveau desquelles les fréquences ont été réinitialisées ayant lieu ensuite.

4. Procédé selon l'une des revendications précédentes, **caractérisé en ce que** l'attribution de fréquence se fait fondamentalement pour les exigences de fréquence d'une priorité choisie.

5. Procédé selon l'une des revendications précédentes, **caractérisé en ce que** le procédé de réinitialisation considère les stations de base avec des exigences de fréquence non saturées de la même priorité que pour l'attribution de fréquence.

6. Procédé selon l'une des revendications précédentes, **caractérisé en ce que** des fréquences d'une priorité différente de celle de l'étape d'attribution de fréquence actuelle peuvent être changées elles aussi.

7. Procédé selon l'une des revendications précédentes, **caractérisé en ce que** dans le cas où plusieurs solutions valables sont déterminées pour l'une des étapes décrites, c'est la solution présentant le plus petit nombre de fréquences à réinitialiser qui est choisie.

8. Procédé selon l'une des revendications précédentes, **caractérisé en ce que** dans le cas où il y a plusieurs solutions avec le même nombre de fréquences à réinitialiser, c'est la qualité des fréquences à réinitialiser qui détermine le choix de la solution, les fréquences avec la priorité Pn étant de préférence réinitialisées avant les priorités Pn-1.
